# EUROPEAN PATENT APPLICATION

(11) **EP 4 815 270 A1**
(43) Date of publication of application: **30.09.2026**
(21) Application number: 25222769.9
(22) Date of filing: 11.12.2025
(51) Int. Cl.: H02K 7/116, H02K 7/18

(54) **CONCENTRIC DIFFERENTIAL COMBINING GEARBOX INTEGRATED WITH ELECTRIC MOTOR DRIVE**

(30) Priority: 26.03.2025 IT 202500006216
(71) Applicant: GE Avio S.r.l., 10040 Rivalta di Torino (TO) (IT)
(72) Inventor: MARTINA, Vincenzo, 10040 Rivalta di Torino (IT); PIAZZA, Andrea, 10040 Rivalta di Torino (IT)
(74) Representative: Openshaw & Co.

(57) **Abstract**

A hybrid electric propulsion system includes a gearbox and electric machine assembly that includes a planetary gear assembly and an electric machine that is secured to a ring gear of the planetary gear assembly. The electric machine can be operated as a motor or a generator to provide power to or extract power from the planetary gear assembly so as to provide multiple hybrid operations of the propulsion system. The integrated design of the gearbox and electric machine assembly also provides for a more compact hybrid propulsion system.

## Description

The subject matter of this disclosure was co-funded by the European Union - Grant Agreement N° 101102020.

### TECHNICAL FIELD

This disclosure relates to hybrid electric propulsion machines for aircraft applications and, more particularly, to hybrid electric propulsion machines including an integrated gearbox and electric machine.

### BACKGROUND

Hybrid electric propulsion systems often include, *inter alia,* a turbine engine, a gearbox, an electric machine, a propellor, and utilities. Typically, the turbine engine includes at least one shaft that is coupled to the gearbox, and other accessory shafts that couple the gearbox to the electric machine, the propellor, and to other engine accessories. The gearbox reduces the speed of the accessory shafts as compared to that of the engine shaft to speeds better suited for operating the accessories.

### BRIEF DESCRIPTION OF THE DRAWINGS

A better understanding of the features and advantages of the disclosed technology will be obtained by reference to the following detailed description that sets forth illustrative aspects, in which the principles of the technology are utilized, and the accompanying drawings of which:
FIG. 1 is a schematic view of a hybrid electric propulsion system including, *inter alia,* a turbine engine having an electric machine and a gearbox;
FIG. 2A is a schematic, cross-sectional view of an integral motor drive planetary gearbox (hereinafter "IMD-PGB") according to aspects of the disclosure;
FIG. 2B is a schematic, cross-sectional view of IMD-PGB shown in FIG. 2A further illustrating bearing assemblies and connection ports for electric power transfer and for control system links;
FIG. 3 is a side perspective view of a planetary gear assembly; and
FIG. 4 is a schematic, cross-sectional view of an alternate version of the gearbox and electric machine assembly according to further aspects of the disclosure.

Further exemplary aspects of the disclosure are described in more detail below with reference to the appended figures. Aspects of this disclosure may be combined without departing from the scope of the disclosure.

### DETAILED DESCRIPTION

Reference will now be made in detail to aspects of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. Accordingly, connection references do not necessarily imply that two elements are directly connected and in fixed relation to one another. The exemplary drawings are for purposes of illustration only and the dimensions, positions, order and relative sizes reflected in the drawings attached hereto can vary.

As used herein, the terms "first," "second," "third," etc. may be used interchangeably to distinguish one component from another and are not intended to signify location or importance of the individual components. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, such descriptors are used merely for ease of referencing multiple elements or components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural references unless the context clearly dictates otherwise.

Although this disclosure will be described in terms of specific aspects, it will be readily apparent to those skilled in this art that various modifications, rearrangements, and substitutions may be made without departing from the spirit of this disclosure.

For purposes of promoting an understanding of the principles of this disclosure, reference will now be made to exemplary aspects illustrated in the drawings, and specific language will be used to describe the same. It will nevertheless be understood that no limitation of the scope of this disclosure is thereby intended. Any alterations and further modifications of the inventive features illustrated herein, and any additional applications of the principles of this disclosure, as illustrated herein, which would occur to one skilled in the relevant art and having possession of this disclosure, are to be considered within the scope of this disclosure.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in any appropriately detailed structure.

The phrases "in an aspect," "in aspects," "in various aspects," "in some aspects," "in other aspects," or the like, may each refer to one or more of the same or different aspects in accordance with this disclosure.

Approximating language, as used herein, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components and/or the systems or manufacturing the components and/or the systems. For example, the approximating language may refer to being within a one, two, four, ten, fifteen, or twenty percent margin in either individual values, range(s) of values and/or endpoints defining range(s) of values.

In general, hybrid electric propulsion systems (e.g., for aircraft applications) of this disclosure may be in the form of a hybrid electric turbo prop engine.

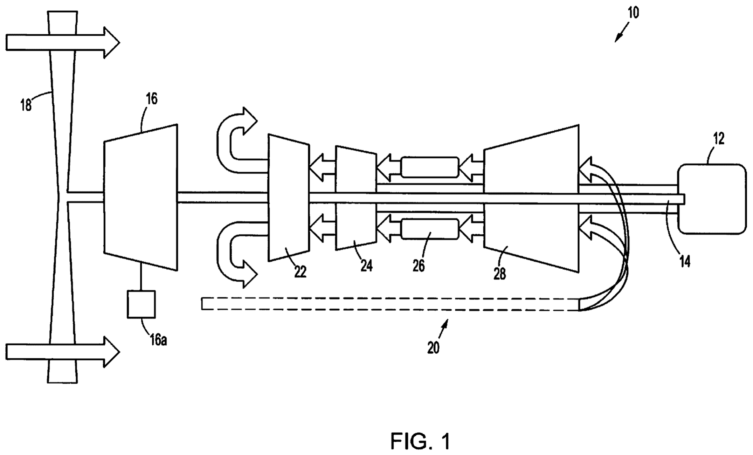

FIG. 1 is a schematic illustration of a typical hybrid electric propulsion system 10 which generally includes an electric machine 12 on a first end of a shaft 14 at a first end of the propulsion system 10 for driving a gearbox 16 on a second end of the propulsion system 10, which, in turn, drives a propellor 18 at the second end of the propulsion system 10. The turbine shaft 14 extends along a turbine engine 20 which includes, *inter alia,* a low-power turbine 22, a high-power turbine 24 positioned aft of the low-power turbine 22, a combustor 26 positioned aft of the high-power turbine 24, and a high-power compressor 28 positioned aft of the combustor 26. In some aspects of the disclosure, the turbine shaft 14 includes a high-power turbine shaft and a low-power turbine shaft. The gearbox 16 includes a lubrication system 16a that is separate from the turbine engine 20.

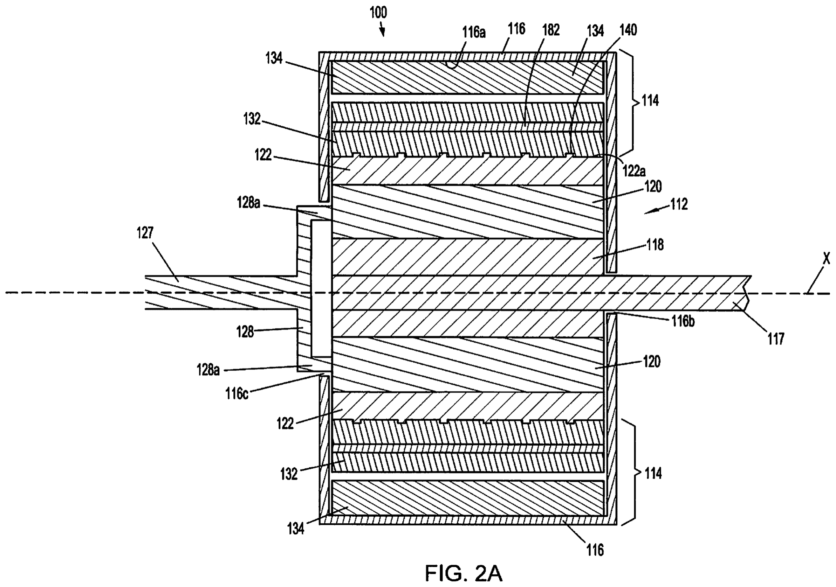

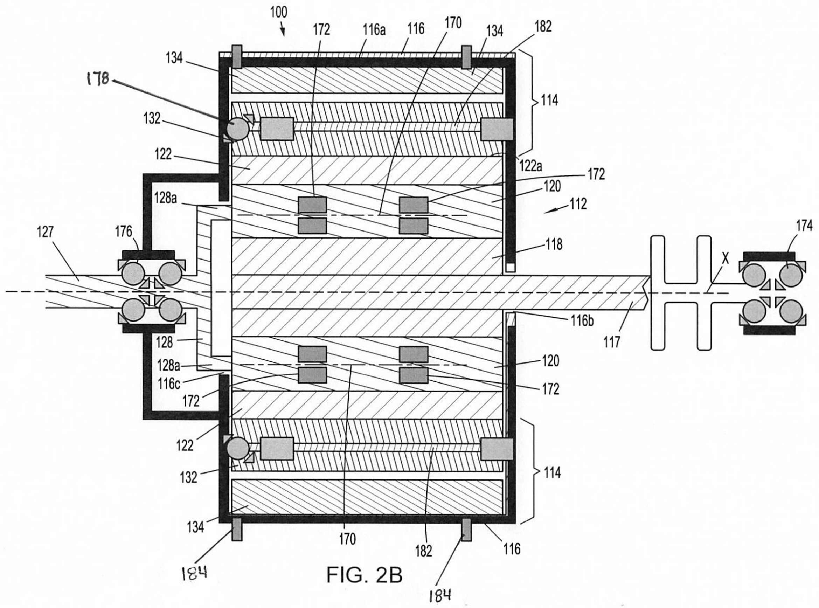

FIG. 2A illustrates the integral motor drive planetary gearbox (hereinafter "IMD-PGB") 100 shown generally that can be incorporated into the hybrid electric propulsion system 10 (FIG. 1) to provide a more compact propulsion system. The IMD-PGB 100 includes a planetary gear assembly 112 and an electric machine drive 114 that is mounted about the planetary gear assembly 112 and can be operated as a generator or a motor to insert power into or extract power from the planetary gear assembly 112 to provide multiple hybrid operations. The planetary gear assembly 112 and the electric machine drive 114 are enclosed within an outer casing 116 to form an integrated, compact assembly. The outer casing 116 receives the planetary gear assembly 112 and the electric machine drive 114 and defines first and second openings 116b and 116c, respectively, that are aligned with the longitudinal axis "X" to facilitate passage of a drive shaft 117 and a carrier shaft 127. The outer casing 116 includes an inner surface 116a that surrounds and supports the electric machine drive 114. In aspects of the disclosure, bearings (see FIG. 2B) are provided to support the drive shaft 117, the carrier shaft 127, the components of the planetary gear assembly 112 and the electric machine drive 114.

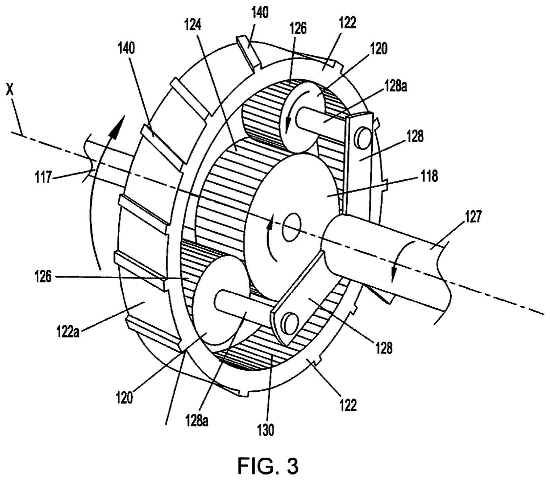

The planetary gear assembly 112, shown schematically in FIGS. 2A-3, includes a sun gear 118, a plurality of planet gears 120, and a ring gear 122. The sun gear 118 is coupled to a drive shaft 117 (FIG. 2A) and includes outer gear teeth 124. The drive shaft 117 is secured or coupled to the sun gear 118 such that rotation of the drive shaft 117 causes corresponding rotation of the sun gear 118 about a longitudinal axis "X" of the drive shaft 117. Each of the planet gears 120 includes outer gear teeth 126 that are engaged with the outer gear teeth 124 of the sun gear 118 such that rotation of the sun gear 118 causes rotation of the planet gears 120 about the sun gear 118 and about the longitudinal axis "X". The planet gears 120 are coupled to a carrier shaft 127 by links 128 and 128a such that rotation of planet gears 120 about the sun gear 118 causes corresponding rotation of the carrier shaft 127 about the longitudinal axis "X". The ring gear 122 includes inner gear teeth 130 that are engaged with the outer gear teeth 126 of the planet gears 120 such that rotation of the planet gears 120 about the sun gear 118 causes rotation of the ring gear 122 in a direction opposite to the direction of rotation of the planet gears 120 about the sun gear 118.

In aspects of the disclosure, the drive shaft 117 is coupled to or formed integrally with a turbine shaft, e.g., the high-power turbine shaft or the low-power turbine shaft. It is also envisioned that the drive shaft 117 could be an output shaft (not shown) of an electric motor.

The electric machine drive 114 (FIG. 2A) includes a rotor 132 and a stator 134. The rotor 132 is secured to the outer surface 122a of the ring gear 122 and rotates with the ring gear 122 about the longitudinal axis "X" defined by the drive shaft 117. In aspects of the disclosure, the rotor 132 is connected to the outer surface 122a of the ring gear 122 using splines 140 although other fastening techniques and devices including welds, pins, screws, or the like are envisioned. The stator 134 is secured to an internal surface of the outer casing 116 of the IMD-PGB 100 and is positioned about the rotor 132. In aspects of the disclosure, the stator 134 of the electric machine drive 114 can be secured to the inner surface 116a of the outer casing 116 using a bolted joint or other securement features such as splines or the like.

In aspects of the disclosure, the carrier shaft 127 is linked to the planet gears 120 by the links 128 and 128a to transfer power to a utility such as a propeller or fan system that is coupled to the carrier shaft 127. In addition, the ring gear 122 is coupled to the rotor 132 of the electric machine drive 114, and the electric machine drive 114 is embedded within the outer casing 116 of the IMD-PGB 100 to minimize the space required for the hybrid electric propulsion system 10, i.e., to provide compactness.

Although not shown, the hybrid electric propulsion system 10 includes an advanced control system including a Hybrid-FADEC (full authority digital engine control) that can regulate and manage the speed and torque of each of the shafts, and manage the power sources/utilities, e.g., pitch control system, turbine shaft speed and power, exhaust gas temperature, electric motor voltage, current, and switching frequency, etc. Exemplary components of the control system include, for example, a database, one or more processors, at least one memory, and a network interface. In aspects, the control system may include a graphical processing unit (GPU), which may be used for processing machine learning network models. Various components of the control system may be utilized to carry out instructions to perform the various operations of the hybrid electric propulsion systems of this disclosure. Further, the control system may include communication circuitry capable of wired or wireless communication to receive data from other devices.

The hybrid electric propulsion system 10 including the IMD-PGB 100 may vary speed and power (insertion and extraction) as needed to provide multiple hybrid operations. The electric machine drive 114 speed, torque, and power variability allow for speed, torque, and power transfer variation at the carrier shaft 127 to enable constant operating characteristics, speed and/or torque, at the drive shaft 117. In addition, the electric machine drive 114 speed, torque, and power variability allow for speed, torque, and power transfer variation of the drive shaft 117 to enable constant operating characteristics, speed and/or torque, at the carrier shaft 127. Still, the electric machine drive 114 can maintain constant operating characteristics, speed and/or torque, so that the drive shaft 117 variation of speed, torque, and power allow at least a variation of speed and/or torque of the carrier shaft 127.

More specifically, the hybrid electric propulsion system 10 including the IMD-PGB 100 can function in three different modes including a pure thermal mode, a pure electric mode, and a hybrid mode. In the pure thermal mode, the electric machine drive 114 is blocked such that the gas turbine shaft provides power as per conventional gas turbine engines. In the pure electric mode, only the electric machine drive 114 provides power to the carrier shaft 127. In the hybrid mode, the speed, rotational direction, and torque of the electric machine drive 114 are controlled to improve efficiency, reduce emissions, and enhance engine performance. In that respect, the rotational direction of the electric machine drive 114 can be operated in one direction to provide power supply to the carrier shaft 127, or in the opposite direction to extract power and operate as an electric generator. The electric machine drive 114 speed value and direction determines the total electrical power that the electric machine drive 114 consumes or generates. Controlling the speed and torque of the electric machine drive 114 allows for improved management of the system 10, and enables adjustment of the transmission ratio between the gas turbine and the electric machine drive 114 to optimize power delivery, efficiency, and performance across a range of operating conditions.

FIG. 2B is a schematic cross-sectional view of the IMD-PGB 100 illustrating bearings to support the components of the IMD-PGB 100 including the drive shaft 117, the carrier shaft 127, and the gears of the planetary gear assembly 112. In some aspects of the disclosure, bearings 174 and 176, e.g., angular contact ball bearings, are provided to support the input or drive shaft 117 and the carrier shaft 127, respectively, and bearings 172, e.g., roller or journal bearings, are provided to support planet gear shafts 170 of the planetary gear assembly 112. In addition, bearings 178, e.g., angular contact ball bearings, are provided to support the ring gear 122 and rotor 132 of the IMD-PGB 200. It is envisioned that different types of bearings can be used to support the different components of the IMD-PGB 100 to support radial and axial loads including roller bearings (cylindrical, tapered, spherical, needle), ball bearings, and journal bearings of steel or ceramic construction. The type of bearing selected depends on load type and magnitude, space constraints, operating speed and temperature, and durability.

The IMD-PGB 100 also includes ports or openings 184 that provides access for electric power transfer to and from the electric machine drive 114, and for access for connection links for connecting the IMD-PGB 100 to the advanced control system of the hybrid electric propulsion system. In addition, the IMD-PGB 200 may include cooling passages 182 or jackets positioned about or within the components of the IMD-PGB 200.

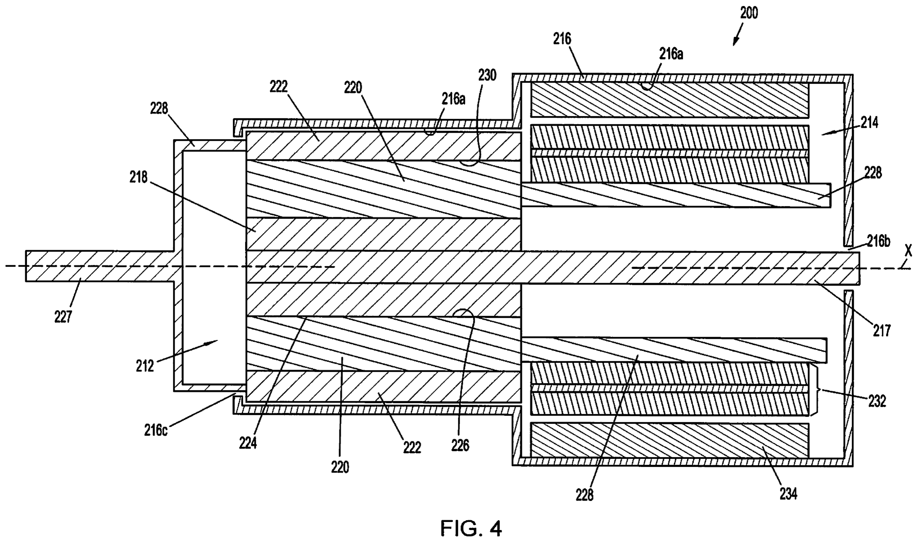

FIG. 4 illustrates an alternative version of the IMD-PGB shown generally as 200. The IMD-PGB 200 includes a planetary gear assembly 212 and an electric machine drive 214 that is positioned about a portion of the planetary gear assembly 212 and can be operated as a generator or a motor to insert power into or extract power from the planetary gear assembly 212 to provide multiple hybrid operations. The planetary gear assembly 212 and the electric machine drive 214 are enclosed within an outer casing 216 to form an integrated, compact assembly.

The planetary gear assembly 212 is like the planetary gear assembly 112 described above and includes a sun gear 218, a plurality of planet gears 220, and a ring gear 222. The sun gear 218 is coupled to a drive shaft 217 and includes outer gear teeth 224. The drive shaft 217 is secured or coupled to the sun gear 218 such that rotation of the drive shaft 217 causes corresponding rotation of the sun gear 218 about a longitudinal axis "X" of the drive shaft 217. Each of the planet gears 220 includes outer gear teeth 226 that are engaged with the outer gear teeth 224 of the sun gear 218 such that rotation of the sun gear 218 causes rotation of the planet gears 220 about the sun gear 218 and about the longitudinal axis "X". The planet gears 220 are coupled to the electric machine drive 214 by a planet shaft 228 such that rotation of planet gears 220 about the sun gear 218 causes corresponding rotation of the planet shaft 228 and a rotor 232 of the electric machine drive 214 about the longitudinal axis "X". The ring gear 222 includes inner gear teeth 230 that are engaged with the outer gear teeth 226 of the planet gears 220 such that rotation of the planet gears 220 about the sun gear 218 causes rotation of the ring gear 222 in a direction opposite to the direction of rotation of the planet gears 220 about the sun gear 218.

In aspects of the disclosure, the drive shaft 217 is a turbine shaft, e.g., the high-power turbine shaft or the low-power turbine shaft. It is also envisioned that the drive shaft 217 could be an output shaft of an electric motor.

The electric machine drive 214 includes the rotor 232 and a stator 234. The rotor 232is secured to the planet link or shaft 228 and rotates with the planet gears 220 about the longitudinal axis "X" defined by the drive shaft 217. In aspects of the disclosure, the rotor 232 is coupled to the planet shaft 228 using splines although other fastening techniques and devices including welds, pins, screws, or the like are envisioned. The stator 234 is secured to an internal surface of the outer casing 216 of the IMD-PGB 200 and is positioned about the rotor 232. Although not shown, the IMD-PGB 200 includes bearings to facilitate smooth relative rotation between the components including the rotor 232 and the stator 234. The outer casing 216 defines a cavity 216a that receives the planetary gear assembly 212 and the electric machine drive214 and first and second openings 216b and 216c, respectively, that are aligned with the longitudinal axis "X" to facilitate passage of the drive shaft 217 and the carrier shaft 227. In aspects of the disclosure, bearings are provided within the outer casing 216 to support the drive shaft 217, the carrier shaft 227, planet gears 220, rotor 232, and ring gear 222. The electric machine drive 214 of the IMD-PGB 200 is spaced longitudinally fromthe sun gear 218, the planet gears 220, and the ring gear 222 but rotates about the same longitudinal axis "X" as the planetary gear assembly 212. Although not shown, the IMD-PGB 200 includes bearings as described above to support the components of the IMD-PGB 200.

The hybrid electric propulsion system 10 including the IMD-PGB 200, as described above regarding the IMD-PGB 100, can vary speed and power (insertion and extraction) as needed to provide multiple hybrid operations.

The disclosed versions of the IMD-PGB 100 and 200 in which the electric machine drive and the planetary gear assembly have an inline configuration provides for a more compact propulsion system as compared to systems in which the electric machine drive and the planetary gear assembly are offset. In aerospace applications, the improved compactness allows for reduced size of the frontal area of the propulsion system which results in reduced aerodynamic drag and ultimately to lower fuel consumption.

Further aspects of the disclosure are provided by the subject matter of the following clauses.

A gearbox and electric machine assembly comprising: an outer casing defining a cavity; a planetary gear assembly received within the cavity of the outer casing and including a sun gear, planet gears, and a ring gear, the sun gear rotatable about a longitudinal axis and having outer gear teeth, the planet gears positioned about the sun gear and having outer gear teeth that are engaged with the outer gear teeth of the sun gear, the planet gears rotatable about the sun gear and about the longitudinal axis, the ring gear having inner gear teeth engaged with the outer gear teeth of the planet gears; and an electric machine having a stator and a rotor, the rotor connected with the planetary gear assembly and rotatable about the longitudinal axis, the stator supported about the rotor within the cavity of the outer casing.

The gearbox and electric machine assembly according to any other clause, wherein the outer casing defines a first opening, a second opening, and connection ports for electric power transfer and for control system links, the first opening receiving a drive shaft that is engaged with the sun gear, and the second opening receiving a carrier shaft.

The gearbox and electric machine assembly according to any other clause, wherein the rotor is secured to the ring gear and the planet gears are secured to the carrier shaft.

The gearbox and electric machine assembly according to any other clause, wherein the rotor is secured to the ring gear using splines, welds, pins, or screws.

The gearbox and electric machine assembly according to any other clause, wherein the rotor is secured to the planet gears and is rotatable about the longitudinal axis with the planet gears.

The gearbox and electric machine assembly according to any other clause, wherein the ring gear is coupled to the carrier shaft.

The gearbox and electric machine assembly according to any other clause, wherein the rotor and the stator are positioned within the outer casing about the planetary gear assembly.

The gearbox and electric machine assembly according to any other clause, wherein the electric machine is spaced from the planetary gear assembly along the longitudinal axis.

The gearbox and electric machine assembly according to any other clause, further including a planet shaft supported on the planet gears, the rotor supported on the planet shaft.

A hybrid electric propulsion system comprising: a turbine engine including a turbine, a combustor, a compressor, a turbine shaft, and a gearbox and electric machine assembly, the gearbox and electric machine assembly including: an outer casing defining a cavity; a planetary gear assembly received within the cavity of the outer casing and including a sun gear, planet gears, and a ring gear, the sun gear rotatable about a longitudinal axis and having outer gear teeth, the planet gears positioned about the sun gear and having outer gear teeth that are engaged with the outer gear teeth of the sun gear, the planet gears rotatable about the sun gear and about the longitudinal axis, the ring gear having inner gear teeth engaged with the outer gear teeth of the planet gears; and an electric machine having a stator and a rotor, the rotor engaged with the planetary gear assembly and rotatable about the longitudinal axis, the stator supported about the rotor within the cavity of the outer casing.

The hybrid electric propulsion system according to any other clause, wherein the turbine includes a low-power turbine and a high-power turbine.

The hybrid electric propulsion system according to any other clause, wherein the outer casing defines a first opening, a second opening, and connection ports for electric power transfer and for control system links, the first opening receiving a drive shaft that is engaged with the sun gear, and the second opening receiving a carrier shaft that is coupled to a utility.

The hybrid electric propulsion system according to any other clause, wherein the rotor is secured to the ring gear and the planet gears are secured to the carrier shaft.

The hybrid electric propulsion system according to any other clause, wherein the rotor is secured to the ring gear using splines, welds, pins, or screws.

The hybrid electric propulsion system according to any other clause, wherein the rotor is secured to the planet gears and is rotatable about the longitudinal axis with the planet gears.

The hybrid electric propulsion system according to any other clause, wherein the ring gear is coupled to the carrier shaft.

The hybrid electric propulsion system according to any other clause, wherein the rotor and the stator are positioned within the outer casing about the planetary gear assembly.

The hybrid electric propulsion system according to any other clause, wherein the electric machine is spaced from the planetary gear assembly along the longitudinal axis.

The hybrid electric propulsion system according to any other clause, further including a planet shaft supported on the planet gears, the rotor supported on the planet shaft.

A gearbox and electric machine assembly, comprising: a planetary gear assembly including a sun gear, planet gears, and a ring gear, the sun gear rotatable about a longitudinal axis and having outer gear teeth, the planet gears positioned about the sun gear and having outer gear teeth that are engaged with the outer gear teeth of the sun gear, the planet gears rotatable about the sun gear and about the longitudinal axis, the ring gear having inner gear teeth engaged with the outer gear teeth of the planet gears; and an electric machine having a stator and a rotor, the rotor engaged with the planetary gear assembly and rotatable about the longitudinal axis, the stator fixedly supported about the rotor.

The gearbox and electric machine assembly (100, 200) according to any other clause, further including an outer casing (116, 216), the planetary gear assembly (112, 212) and the electric machine (114, 214) received within the outer casing (116, 216).

The gearbox and electric machine assembly (100, 200) according to any other clause, wherein the outer casing (116, 216) defines a first opening (116b, 216b), a second opening (116c, 216c), and connection ports for electric power, the first opening (116b, 216b) receiving a drive shaft (117, 217) that is engaged with the sun gear (118, 218), and the second opening (116c, 216c) receiving a carrier shaft (127, 227).

The gearbox and electric machine assembly (100) according to any other clause, wherein the rotor (132) is secured to the ring gear (122) and the planet gears (120) are secured to the carrier shaft (127).

The gearbox and electric machine assembly (100) according to any other clause, wherein the rotor (132) is secured to the ring gear (122) using splines (140), welds, pins, or screws.

The gearbox and electric machine assembly (200) according to any other clause, wherein the rotor (232) is secured to the planet gears (220) and is rotatable about the longitudinal axis (X) with the planet gears (220).

The gearbox and electric machine assembly (200) according to any other clause, wherein the ring gear (222) is coupled to the carrier shaft (227).

The gearbox and electric machine assembly (100) according to any other clause, wherein the rotor (132) and the stator (134) are positioned within the outer casing (116) about the planetary gear assembly (112).

The gearbox and electric machine assembly (200) according to any other clause, wherein the electric machine (214) is spaced from the planetary gear assembly (212) along the longitudinal axis (X).

The gearbox and electric machine assembly (200) according to any other clause, further including a planet shaft (228) supported on the planet gears (220), the rotor (232) supported on the planet shaft (228).

Persons skilled in the art will understand that the structures and methods specifically described herein and shown in the accompanying figures are non-limiting exemplary aspects, and that the description, disclosure, and figures should be construed merely as exemplary of aspects. It is to be understood, therefore, that the disclosure is not limited to the precise aspects described, and that various other changes and modifications may be affected by one skilled in the art without departing from the scope or spirit of the disclosure. Additionally, the elements and features shown or described in connection with certain aspects may be combined with the elements and features of certain other aspects without departing from the scope of the disclosure, and that such modifications and variations are also included within the scope of the disclosure. Accordingly, the subject matter of the disclosure is not limited by what has been particularly shown and described.

## Claims

1. A gearbox and electric machine assembly (100, 200) comprising:
a planetary gear assembly (112, 212) including a sun gear (118, 218), planet gears (120, 220), and a ring gear (122, 222), the sun gear (118, 218) rotatable about a longitudinal axis (X) and having outer gear teeth (124, 224), the planet gears (120, 220) positioned about the sun gear (118, 218) and having outer gear teeth (126, 226) that are engaged with the outer gear teeth (124, 224) of the sun gear (118, 218), the planet gears (120, 220) rotatable about the sun gear (118, 218) and about the longitudinal axis (X), the ring gear (122, 222) having inner gear teeth (130, 230) engaged with the outer gear teeth (126, 226) of the planet gears (120, 220); and
an electric machine (114, 214) having a stator (134, 234) and a rotor (132, 232), the rotor (132, 232) solidly connected with the planetary gear assembly (112, 212) and rotatable about the longitudinal axis (X), the stator (134, 234) supported about the rotor (132, 232).

2. The gearbox and electric machine assembly (100, 200) according to claim 1, further including an outer casing (116, 216), the planetary gear assembly (112, 212) and the electric machine (114, 214) received within the outer casing (116, 216).

3. The gearbox and electric machine assembly (100, 200) according to any of the preceding claims, wherein the outer casing (116, 216) defines a first opening (116b, 216b), a second opening (116c, 216c), and connection ports for electric power, the first opening (116b, 216b) receiving a drive shaft (117, 217) that is engaged with the sun gear (118, 218), and the second opening (116c, 216c) receiving a carrier shaft (127, 227).

4. The gearbox and electric machine assembly (100) according to claim 3, wherein the rotor (132) is secured to the ring gear (122) and the planet gears (120) are secured to the carrier shaft (127).

5. The gearbox and electric machine assembly (100) according to any of the preceding claims, wherein the rotor (132) is secured to the ring gear (122) using splines (140), welds, pins, or screws.

6. The gearbox and electric machine assembly (200) according to any of claims 1 to 3, wherein the rotor (232) is secured to the planet gears (220) and is rotatable about the longitudinal axis (X) with the planet gears (220).

7. The gearbox and electric machine assembly (200) according to claim 6, wherein the ring gear (222) is coupled to the carrier shaft (227).

8. The gearbox and electric machine assembly (100) according to any of claims 2 to 5, wherein the rotor (132) and the stator (134) are positioned within the outer casing (116) about the planetary gear assembly (112).

9. The gearbox and electric machine assembly (200) according to any of claims 1 to 3 and 5 to 8, wherein the electric machine (214) is spaced from the planetary gear assembly (212) along the longitudinal axis (X).

10. The gearbox and electric machine assembly (200) according to claim 9, further including a planet shaft (228) supported on the planet gears (220), the rotor (232) supported on the planet shaft (228).
